# EUROPEAN PATENT SPECIFICATION

(11) **EP 4 311 425 B1**
(45) Date of publication and mention of the grant of the patent: **25.03.2026**
(21) Application number: 23184811.0
(22) Date of filing: 11.07.2023
(51) Int. Cl.: A01D 85/00, A01F 15/08

(54) **SYSTEM AND METHOD FOR ANALYZING AND GROUPING CROP BALES**
SYSTEM UND VERFAHREN ZUR ANALYSE UND GRUPPIERUNG VON ERNTEGUTBALLEN
SYSTÈME ET PROCÉDÉ D'ANALYSE ET DE REGROUPEMENT DE BALLES DE RÉCOLTE

(30) Priority: 29.07.2022 US 202217877176
(43) Date of publication of application: 31.01.2024
(73) Proprietor: Deere & Company, Moline, IL 61265 (US)
(72) Inventor: GORIVALE, Sameer, 68163 Mannheim (DE); VADNERE, Mohan A, 68163 Mannheim (DE); SOMAROWTHU, Mahesh, 68163 Mannheim (DE)
(74) Representative: Stein, Stefan

(56) References cited:
- EP-A1- 4 124 237
- WO-A1-2022/130043
- CN-A- 111 443 655
- US-A1- 2018 021 796
- US-A1- 2018 260 675

## Description

### FIELD OF THE DISCLOSURE

The present disclosure generally relates to a system and method for evaluating the properties of a collection of crop bales, and, more particularly, to a method and system for categorizing crop bales based on selected classification goals.

### BACKGROUND

Agricultural equipment, such as, for example, balers, among other bale implements, can be used to gather, compress, and/or shape crop material into bales, thereby producing crop bales. A variety of different types of crops can be baled by such agricultural equipment, including, for example, hay, flax straw, cotton, silage, and salt march hay, among other crops. In at least some instances, the crop can be cut, and possibly raked or otherwise manipulated, before being packaged with a bale implement.

At least certain types of crop bales are provided for feeding livestock. Allocating a value to such crop bales can often be based on a perception of quality that is derived from the physical appearance of the crop material of the crop bale, as well as the bale shape, type of crop material, and the method in which the crop material was wrapped in forming the crop bale. Yet, with respect to certain types of crop material, such as least hay, the feed quality of the crop material can vary from crop bale to crop bale, thereby rendering some crop bales more valuable than others. Further, such differences in the feed quality of the crop material, including, for example, nutrition levels, can present issues with respect to determining which animal(s) is/are to be feed by the crop bale(s). Moreover, different animals can have different nutritional needs, including nutritional needs that can vary based on animal age, condition, season, and/or animal type. Consequently, differences in feed quality can, regardless of similarities in external appearances, result in some crop bales being more, or less, suited to satisfy the nutritional needs of at least certain animals. Failure to properly satisfy such nutritional needs can at least contribute to a decrease in animal productivity and associated yields, including, for example, milk and beef yields. Further, the quality of the crop material of the crop bales can impact bale storage and management strategies, including, for example, forecasting crop bale nutritional criteria for different seasons, and determining associated feeding activities for maintaining efficient bale feeding for the animals.

Accordingly, systems and methods for analyzing and grouping crop bales categorizing based on selected classification goals remain areas of interest.

Grouping crop bales is e.g. known from EP 4 124 237 A1.

### SUMMARY

The present disclosure may comprise one or more of the following features and combinations thereof. The invention is defined by the appended claims.

In one embodiment of the present disclosure, a system can be provided for grouping crop bales. The system can include a constituent sensor for analyzing, for each crop bale of a plurality of crop bales, a plurality of properties of a crop material of the crop bale. The system can also include a bale grouping computing device that is configured to receive a selection of a classification goal from a plurality of classification goals, each of the plurality of classification goals (1) having two or more categories, and (2) assigns a weightage to the plurality of properties, wherein the weightage assigned to at least one property of the plurality of properties for one classification goal of the plurality of classification goals is different than the weightage assigned to the at least one property for at least another classification goal of the plurality of classification goals. The bale grouping computing device can also be configured to record, in a database and for each crop bale of the plurality of crop bales, a dataset corresponding to the plurality of properties, and assign, using a k-means clustering analysis, the dataset of each crop bale of the plurality of crop bales to a cluster of a plurality of clusters. Each cluster of the plurality of clusters can correspond to one category of the two or more categories of the selected classification goal, Additionally, the bale grouping computing device can also be configured to determine a location of a centroid for each cluster of the plurality of clusters utilizing the weightage assigned for the selected classification goal, and group each crop bale of the plurality of crop bales into a category of the two or more categories of the selected classification goal based on the cluster to which the dataset associated with the crop bale was assigned.

In another embodiment, a method is provided for grouping crop bales. The method can include sensing, by a constituent sensor, and for each crop bale of a plurality of crop bales, a plurality of properties of a crop material of the crop bale, and recording, by at least one controller having a processor, for each crop bale, the sensed plurality of properties as a dataset. The at least one controller can receive a signal that indicates a classification goal selected from a plurality of classification goals, each classification goal of the plurality of classification goals having two or more categories. At least one classification goal of the plurality of classification goals can assign a weightage to at least one property of the plurality of properties that is different than a weightage assigned to the at least one property by at least another classification goal of the plurality of classification goals. The at least one controller can also assign the dataset of each crop bale of the plurality of crop bales to a category of the two or more categories of the selected classification goal, wherein the assignment is based at least in part on the weightage assigned for the selected classification goal. Additionally, the at least one controller, can generate a map for display on a display, the map indicating the category to which the dataset for at least one crop bale was assigned.

In a further embodiment of the present disclosure, a computer implemented method is provided for grouping crop bales. The method can include determining, for each crop bale of a plurality of crop bales, a plurality of properties of the crop bale, the plurality of properties including one or more measured properties of a crop material of the crop bale. A database can be generated that contains, for each of the plurality of crop bales, a dataset of the plurality of properties. A selection can be received that indicates a selection of a classification goal from a plurality of classification goals, each of the plurality of classification goals assigning a weightage to the plurality of properties. At least one classification goal can assign a weightage to two or more properties of the plurality of properties that is different than a weightage assigned to the two or more properties by at least another classification goal. The method can also include assigning, using a k-means clustering analysis, the dataset of each crop bale of the plurality of crop bales to a cluster of a plurality of clusters. Each of the plurality of clusters can correspond to one of a plurality of categories of the selected classification goal, wherein a determination of a location of a centroid for each cluster of the plurality of clusters utilizes the weightage assigned for the selected classification goal. Further, each crop bale of the plurality of crop bales can be grouped into a category of the plurality of categories of the selected classification goal based on the cluster to which the dataset associated with the crop bale was assigned. A visual indicator can also be assigned to each of the plurality of crop bales, the visual indicator providing a visual indication of the category to which the crop bale was grouped. Additionally, the method can include generating a map for display that indicates a location of, and the visual indicator assigned to, at least some of the plurality of crop bales.

These and other features of the present disclosure will become more apparent from the following description of the illustrative embodiments.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a side view of an exemplary agricultural harvesting machine coupled to an agricultural vehicle;
FIG. 2 is a side view of the agricultural harvesting machine shown in FIG. 1;
FIG. 3 is a diagrammatic view of a system that includes an agricultural harvesting machine having a constitute senor, a control system, and a central system for assessing the characteristics of, and grouping, crop bales;
FIG. 4 is a simplified block diagram of a method of using a constituent sensor to measure and calculate properties of crop material that is collected for a crop bale;
FIG. 5 is a simplified block diagram of a method for grouping crop bales in two or more categories of a selected classification goal;
FIG. 6 is a simplified illustration of using k-means clustering to determine a location of weighted centroids for three clusters;
FIG. 7 is a display showing a map of different visual indicators that indicate the particular group of a classification goal to which each of a plurality of displayed crop bales is assigned; and
FIG. 8 is an illustration of an exemplary device having a display that can accommodate operator selection of a classification goal, as well as an assignment of weightages to one or more crop bales properties for the selected classification goal.

Corresponding reference numerals are used to indicate corresponding parts throughout the several views.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

A number of features described below may be illustrated in the drawings in phantom. Depiction of certain features in phantom is intended to convey that those features may be hidden or present in one or more embodiments, while not necessarily present in other embodiments. Additionally, in the one or more embodiments in which those features may be present, illustration of the features in phantom is intended to convey that the features may have location(s) and/or position(s) different from the locations(s) and/or position(s) shown.

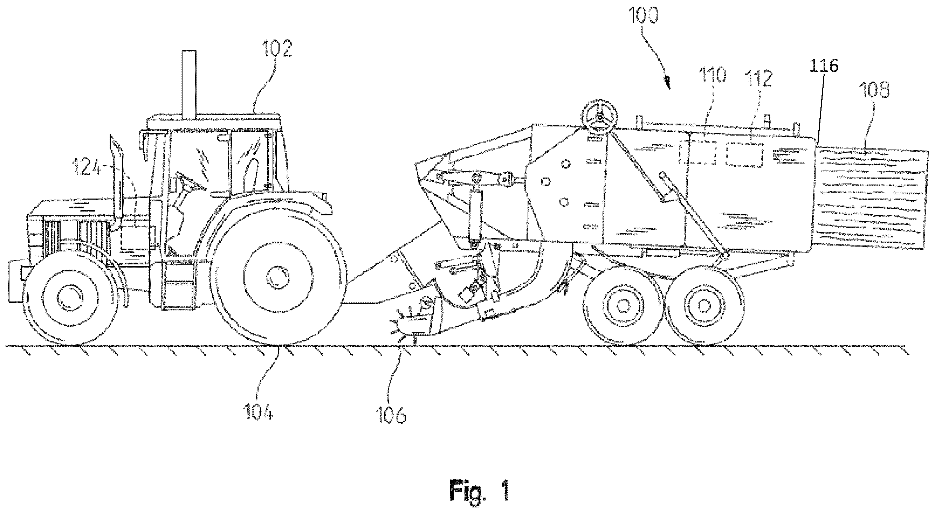

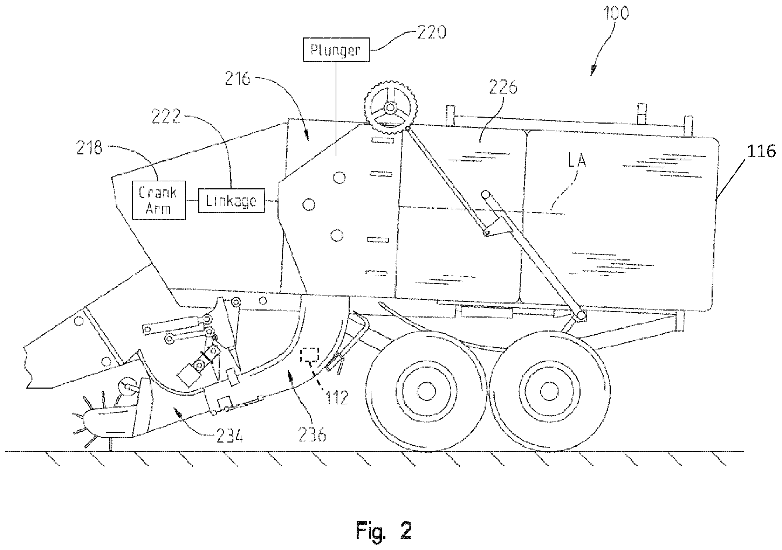

Referring now to FIGS. 1 and 2, an illustrative agricultural harvesting machine 100 is coupled to an agricultural vehicle 102 such as a tractor, for example. In the illustrative embodiment, the harvesting machine 100 is embodied as, or otherwise includes, a baler. Of course, in other embodiments, it should be appreciated that the harvesting machine 100 can be embodied as, or otherwise include, another suitable baler or harvesting machine. In such embodiments, as well as in the illustrative embodiment, the harvesting machine 100 can be combined or integrated with a hay harvester or a combine, among other harvesting machines.

The harvesting machine 100 can be towed and/or propelled by the agricultural vehicle 102. Alternatively, the harvesting machine 100 can be self-propelled. In any case, the harvesting machine 100 is capable of traversing a field 104, gathering crop material 106 from the field 104, and processing the crop material 106 to form crop bales 108, each of which is illustratively embodied as, or otherwise includes, bales.

In some embodiments, the harvesting machine 100 can include one or more mechanisms that cooperate to introduce crop material 106 into a baling or compression chamber 226. For example, the harvesting machine 100 can include a pick-up mechanism 234 that is configured to gather crop material 106 from the ground and feed it toward the baling or compression chamber 226, as well as a loading mechanism 236 that is configured to move crop material 106 output by the pick-up mechanism 234 into the baling or compression chamber 226. The pick-up mechanism 234 can include devices such as tines, forks, augers, conveyors, baffles, cutters, pre-cutter assemblies, the like, or any combination thereof. The loading mechanism 236 can include devices such as projections, tines, forks, knives, the like, or any combination thereof.

The baling or compression chamber 226 can include at least one baler or compression system 216 that is capable of compressing and/or shaping crop material 106 into one or more crop bales 108. The compression system 216 can be powered by a drive unit 124 such as, for example, a motor, engine, or prime mover that is capable of propelling the agricultural vehicle 100 and/or the harvesting vehicle 102. For example, rotational power from a power source such as, for example, a drive unit 124 of the agricultural vehicle 102, can be provided or transmitted to the harvesting machine 100 via use of a power-takeoff (PTO) shaft that is coupled to the power source. The PTO shaft can be directly or indirectly coupled to the compression system 216.

According to certain embodiments, the compression system 216 can include a plurality of press rolls. Each press roll can be configured to rotate about a respective axis of the press roll via power from the drive unit 214. Rotation of the press rolls can assist in bringing together crop material 106 in the baling or compression chamber 226, thereby enabling formation of a crop bale 108, including, for example, a round shaped crop bale 108 comprising crop material 106.

Alternatively, according to other embodiments, the compression system 216 can be configured to produce relatively large square shaped crop bales 108. For example, the illustrative compression system 216 can include a crank arm 218, a plunger 220, and a linkage 222. The exemplary crank arm 218 is rotatable about a crank arm axis in response to rotational power directly or indirectly provided to the crank arm 218 by via the drive unit 124. The plunger 220 is coupled to the crank arm 218 and can be movable along a longitudinal axis LA (FIG. 2) in the compression chamber 226 in response to rotation of the crank arm 218 to compress crop material 106. More specifically, the plunger 220 is capable of back-and-forth linear movement (or reciprocal motion) along the axis LA between a de-stroked position and a stroked position that is located rearward of the de-stroked position along the axis LA. Thus, as the plunger 220 moves away from the de-stroked position, the plunger 220 moves rearward through the chamber 226 toward the stroked position to interact with and/or compress/shape the crop material 106 and form a crop package 108.

While the foregoing provide some exemplary manners for the formation of crop bales 108, crop bales 108 can also be formed in a variety of other manners, including, for example, by a press means that comprises press belts, among other manners of forming a crop package 108.

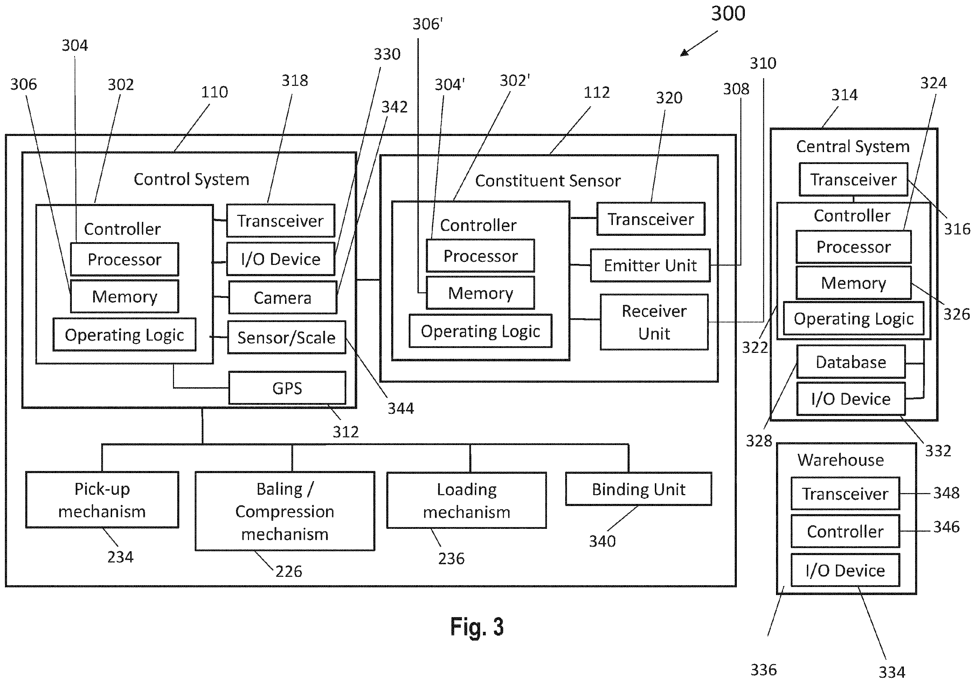

Crop bales 108 formed by the harvesting machine 100 can be ejected from a tailgate or rear door 116 of the harvesting machine 100. According to certain embodiments, the harvesting machine 100 can be a combination baler that includes a wrapping device for wrapping a crop package 108 on the rear side of the harvesting machine 100. Thus, upon completion of the formation of the crop package 108, a bale binding cycle can be initiated in which the crop package 108 is bound with a binding material, such as, a twine or a net, by a binding unit 340 (FIG. 3). After the binding cycle is completed, the tailgate or rear door 116 of the harvesting machine 100 can be opened to eject wrapped crop package 108 from the compression chamber 226 and/or the harvesting machine 100.

As seen in FIG. 3, according to an illustrated embodiment system 300 for analyzing and grouping crop bales 108 can include the harvesting machine 100 and/or the agricultural vehicle 102 having a control system 110 that includes one or more computing devices, such as, for example, one or more controllers 302. Although FIG. 1 depicts the control system 110 mounted on the harvesting machine 100, the control system 110, or portions thereof, can be mounted at various other locations, such as on the vehicle 102, or elsewhere.

The controllers 302 of the control system 110 can be configured to execute various control and/or computational functions of the harvesting machine 100. As such, the controller(s) 302 can be communicatively coupled to various actuators, sensors, and other devices within, or remote from, the harvesting machine 100. The controller(s) 302 can be used to control operation of the compression system 216, pick-up mechanism 234, and/or loading mechanism 236 of the harvesting machine 100. Further, the controller(s) 302 can also be used to control other operation of the machine 100 in various operating modes, as well as changes and/or transitions between those modes and/or other operating modes of the machine 100. Additionally, as discussed below the controllers 302, along with the other controllers 302', 322, 346 discussed herein, can provide a bale grouping computing device that is configured to execute computational functions relating to analysis of the crop bales 108, including the crop materials 106, as well computational functions relating to the categorization or grouping of the crop bales 108 in connection with one or more selected classification goals.

In some embodiments, each controller 302 can include one or more processors 304. Each processor 304 can be embodied as any type of processor or other compute circuit capable of performing various tasks such as compute functions and/or controlling the functions of the harvesting machine 100 depending on, for example, the type or intended functionality of the harvesting machine 100, and/or computational functions relating to the categorization or grouping of the crop bales 108. In some embodiments, each processor 304 can be embodied as a single or multi-core processor, a microcontroller, or other processing/controlling circuit. Additionally, in some embodiments, each processor 304 may be embodied as, include, or be coupled to an FPGA, an application specific integrated circuit (ASIC), reconfigurable hardware or hardware circuitry, or other specialized hardware to facilitate performance of the functions described herein. In some embodiments still, each processor 304 can be embodied as a high-power processor, an accelerator co-processor, an FPGA, or a storage controller.

In some embodiments, each controller 302 can include one or more memory devices 306. Each memory device 306 can be embodied as any type of volatile (e.g., dynamic random access memory (DRAM), etc.) or non-volatile memory capable of storing data therein. Volatile memory can be embodied as a storage medium that requires power to maintain the state of data stored by the medium. Non-limiting examples of volatile memory can include various types of random access memory (RAM), such as dynamic random access memory (DRAM) or static random access memory (SRAM). In some embodiments, each memory device 306 can be embodied as a block addressable memory, such as those based on NAND or NOR technologies. Each memory device 306 can also include future generation nonvolatile devices or other byte addressable write-in-place nonvolatile memory devices. Additionally, in some embodiments, each memory device 306 can be embodied, or otherwise include, a memory device that uses chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. Each memory device 306 can refer to the device itself and/or to a packaged memory product. In some embodiments still, 3D crosspoint memory can comprise a transistor-less stackable cross point architecture in which memory cells sit at the intersection of word lines and bit lines and are individually addressable and in which bit storage is based on a change in bulk resistance. In some embodiments yet still, all or a portion of each memory device 306 can be integrated into the processor(s) 302. Regardless, each memory device 306 can store various software and data used during operation such as task request data, kernel map data, telemetry data, applications, programs, libraries, and drivers.

The system 300 includes one or more constituent sensors 112 that are configured to sense or detect information relating to one or more characteristics of the crop material 106 that is being used to form, and be part of, a particular crop package 108. Such signals or sensed information can be utilized by the controller 302 of the control system 110, and/or a controller 302' that is dedicated to the constituent sensor(s) 112 or another controller 322, 346 of the system 300, to determine properties of the crop material 106 that will become part of a particular crop bale 108. The dedicated controller 302' can include an associated processor 304' and memory device 306' that can be similar to the processor 304 and memory device 306 of the controller 302 of the control system 110, but be configured for operations more specifically related to the operation and usage of the constituent sensor 112. Thus, as seen in FIG. 3, while according to certain embodiments, the constituent sensor(s) 112 is communicatively coupled to the controller 302 of the control system 110, in addition to, or, alternatively, in lieu of, being coupled to the controller 302 of the control system 110, the constituent sensor(s) 112 can instead utilize a dedicated controller 302', and/or another controller 322, 346 of the system 300.

The constituent sensor 112 can be positioned at a variety of locations. Moreover, the constituent sensor 112 can be positioned at locations at which the constituent sensor 112 has access to, and/or can receive, one or more samplings of crop material 106 that will become part of a crop bale 108. For example, according to certain embodiments, the constituent sensor 112 can be positioned at or along the loading mechanism 236 such that the constituent sensor 112 can obtain readings of crop material 106 being feed into the baling or compression chamber 226. Additionally, or alternatively, the constituent sensor 112 can be positioned within the compression chamber 226, thereby sensing information, and/or obtaining measurements, of the crop material 106 as crop material 106 is being formed, compressed, and/or shaped into the crop package 108. Optionally, or additionally, the constituent sensor 112 can be positioned at or around the tailgate or rear door 116 of the harvesting machine 100, including outside of the compression chamber 226. According to such an embodiment, the constituent sensor 112 can sense or otherwise obtain information regarding the crop bale 108 upon completion of the compression or shaping of the crop material 106; during or after the crop bale 108 is bound by binding material; and/or as the crop bale 108 is being released through the tailgate or rear door 116 of the harvesting machine 100.

The constituent sensor 112 can be adapted to measure and/or detect a variety of properties of the crop material 106 that will become at least part of a particular crop bale 108. Such properties include, for example, moisture content, dry matter content, acid detergent fiber (ADF), neutral detergent fiber (NDF), and crude protein. According to certain embodiments, the constituent sensor 112 can be a near-infrared-reflectance (NIR) sensor, among other types of sensing technologies. For example, according to certain embodiments, the constituent sensor 112 can be, or can be similar to, the Harvestlab 3000^{™} from John Deere^{™}, among other types of sensors that are capable of providing information regarding the constituents of the crop material 106. For example, according to other embodiments, the constituent sensor 112 can be a terahertz sensor that is configured to generate and detect electromagnetic waves at terahertz frequencies, with the detected electromagnetic waves being converted to electronic signals that can provide information regarding the constituents of the crop material 106, and thus of the crop bale 108.

As seen in FIG. 3, according to certain embodiments, the constituent sensor 112 can include an emitter unit 308 that can emitted light, and a receiver unit 310 that can collect emitted light that has been scattered off, and/or passed through, the sample crop material 106. The emitter unit 308 and receiver unit 310 can be configured such that the near-infrared region of the electromagnetic spectrum, such as, for example, an electromagnetic spectrum in a range of approximately 780 nanometers to 2500 nanometers, is used to measure properties of the sampled crop material 106. The constituent sensor 112 and/or control system 110 can be adapted to utilize information received from receiver unit 310, such as, for example, wavelengths, to provide an indication of properties relating to the composition of the sampled crop material 106. According to certain embodiments, information regarding wavelengths and/or associated properties of the crop material 106, can be provided by the constituent sensor 112 to other parts of the system 300 in the form of measurable electrical signals.

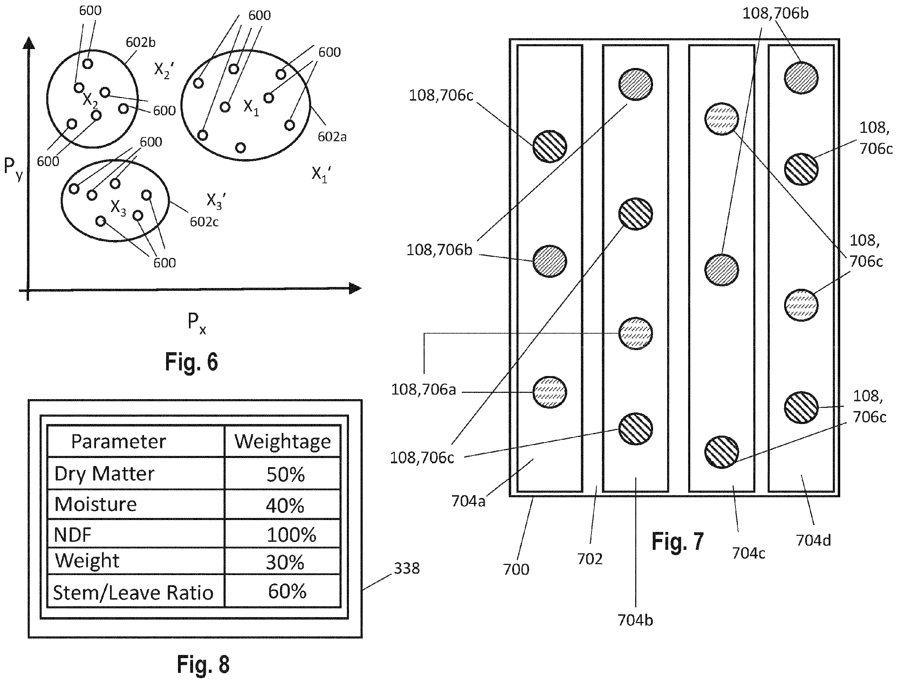

According to certain embodiments, the control system 110 and/or the constituent sensor 112 can include a location device, such as, for example, a global positioning system 312 (GPS). The GPS 312 can be operated to provide a detailed indication of the location of a crop bale 108, and moreover, a location at which a crop bale 108 was dropped or otherwise released from the harvesting machine 100. As discussed below with respect to at least FIG. 7, such location information can later provide an indication of the location at which a crop bale 108 having particular properties, as measured by the constituent sensor 112, can be retrieved or picked up by a picking machine. Thus, in the process of retrieving or picking a plurality of crop bales 108, such as from a field 104, the particular properties associated with the crop bale 108 being retrieved can be known. According to certain embodiments, such location information can also assist in determining which particular crop bales 108 are to be picked or retrieved together, and which crop bales are to be picked or retrieved at a different time. For example, in certain instances, the crop bales 108 to be retrieved can be only those crop bales 108 that have previously been identified as satisfying a particular relative feed value (RFV) and/or are assigned to a particular category or grouping of a classification goal. In such instances. information from the location system, such as from the GPS 312, can be used to indicate to an operator of a picking machine which crop bales 108 are to be retrieved, including the location of crop bales 108, and/or provide an indication of which crop bales 108 are at least presently not to be retrieved.

The control system 110 of the harvesting machine 100, and/or the constituent sensor 112, can be configured to communicate information measured by the constituent sensor 112, and/or information derived from measurements obtained using the constituent sensor 112, to a central system 314, among other locations or other local and/or remote sites, including, for example, a warehouse 336. According to certain embodiments, the central system 314 can be a cloud based system, among other systems, that can provide a database 328 of information received from the central system 314 and/or constituent sensor 112. Information can be communicated between the control system 110 and constituent sensor 112 in a variety of different manners, including, for example, information exchanged between a transceiver 316 of the central system 314 and a transceiver(s) 318, 320 of the control system 110 and/or constituent sensor 112.

Similar to the controller 302 of the control system 110 and/or the controller 302' of the constituent sensor 112, the central system 314 can also include a controller 322 having a processor 324 and a memory device 326 that are adapted to perform operations or functions using information measured by the constituent sensor 112. For example, as discussed below in more detail, the constituent sensor 112 can be utilized to measure properties of the crop material(s) 106 that are part of each individual crop bale 108. At least the controller 322 of the central system 314 can utilize such information for a plurality of crop bales 108 for at least purposes of grouping crop bales 108 having similar properties, such as, for example, groups of crop bales 108 containing crop materials 106 having a similar nutritional content, relative feed value, and/or moisture content, among other criteria. As discussed below, such groupings can, for example, assist in determining storage plans, feeding plans, and/or assigning monetary values for/to a plurality of crop bales 108.

Information regarding the properties of the crop material 106 of a crop bale 108 can similarly be utilized by other controllers, including, for example, the controller 322 of the central system 324 and/or one or more controllers 346 that can be generally located at the same location as the crop bales 108 and/or harvesting machine 100, such as, for example, at the warehouse 336, and/or be at a remote location. Such a local and/or remote controller(s) 346 can be similar to the controllers 302, 324 discussed above with respect to the control system 302 and central system 322. Accordingly, the controller(s) 346 can also include a processor and memory device that is similar to the above-discussed processors 304, 324 and memory devices 306, 326, respectively, and be communicatively coupled to one or more input/output devices 334. Similar to the central system 314, such a configuration can allow an operator to utilize the processes and methods described herein without being in the agricultural vehicle 102, as well as possibly being remote from the location at which the crop bales 108 are located. Additionally, the controller 346 can be communicatively coupled to the control system 110, constituent sensor 112, and/or central system 314 in a variety of manners, including, for example, via a transceiver 348.

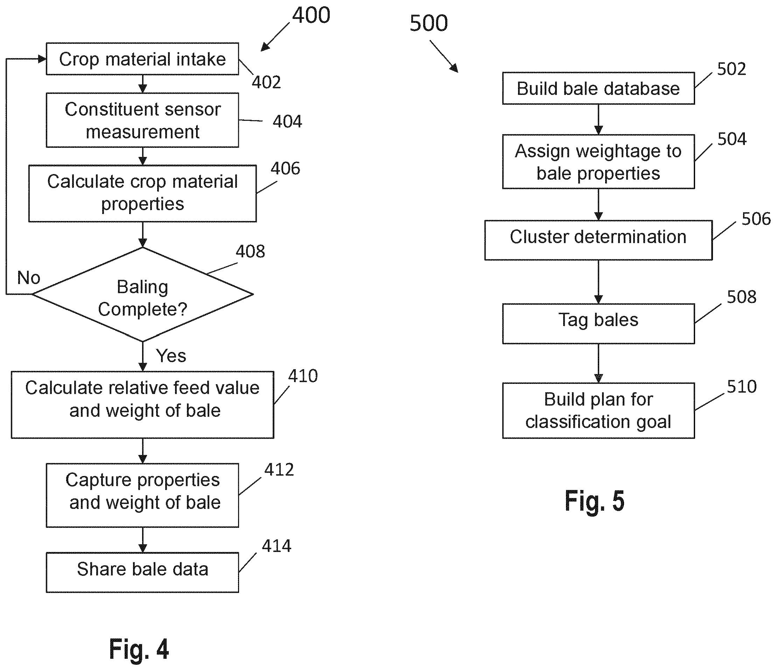

Referring now to FIG. 4, FIG. 4 depicts an illustrative method 400 of assessing the properties of the crop materials 106 for crop bales 108, and thus assessing the properties of the crop bales 108 outputted by the harvesting machine 100. The method 400 can include, or otherwise be embodied as, a set of instructions that are stored in the memory 306, 306', 326 and executable by the processor 304, 304', 324 of the one or more controller(s) 302, 302', 322, 346. Accordingly, it should be appreciated that the method 400 can be performed by the one or more controller(s) 302, 302', 322, 346. Further, it should be appreciated that the method 400 can be performed in a number of sequences other than the illustrative sequence, and that the method 400 can include activities other than, and/or in addition to, those depicted in FIG. 4.

The method 400 can begin with block 402, in which crop material 106 that will become part of an individual crop bale 108 is collected, shaped, and/or wrapped via operation of the harvesting machine 100. As discussed above with respect to at least FIGS. 1 and 2, according to certain embodiments, such intake can include the pick-up mechanism 234 picking up crop material 106 from the ground and feeding it via the loading mechanism 236 to the baling or compression chamber 226.

At block 404, at least a portion of the collected or gathered crop material 106 can be measured by the constituent sensor 112. Such measuring can include activation of the emitter unit 308, as well as collection of at least associated scattered light by the receiver unit 310. Additionally, the measurements obtained at block 404 can be recorded by the controller 302' of the constituent sensor 112 and/or the controller 110 of the control system 110.

As discussed above, such measuring of at least a portion of the gathered or collected crop material 106 can occur at various locations along the harvesting machine 100, such as, for example, at the pick-up mechanism 234, loading mechanism 236, baling or compression chamber 226, during or after being wrapped with binding material, and/or during passage through the tailgate or rear door 116.

The measurements collected at block 404 can involve determining from the information collected by the constituent sensor 112, such as, for example, information regarding the wavelength(s) of the light obtained via used of the receiver unit 310, the associated properties of the particular crop material 106. As discussed above, the measured properties of the crop material 106 can include, for example, contents of the crop material pertaining to moisture, dry matter, acid detergent fiber (ADF), neutral detergent fiber (NDF), starch, ash, crude fiber, sugar, metabolized energy, crude fat, and crude protein, among other information. Additionally, information regarding the measurements can be stored, for example, by the memory device 306' of the constituent sensor 112 and/or the memory device 306 of the control system 110.

For each associated crop bale 108 being formed, the measuring of the associated crop material 106 properties at block 404 can be a one-time event, occur a certain number of times, or be generally continuous. For example, according to certain embodiments, such measuring of the crop material 106 can occur a predetermined number of times, or based on predetermined time intervals. Alternatively, or additionally, such measuring of the crop material 106 can be generally continuous, or at least generally continuous with respect to at least the capacity and/or capability of the constituent sensor 112 to measure crop materials 106 in relatively rapid succession.

According to certain embodiments in which multiple measurements are/were taken at block 404 of the crop material 106 that will be part of a particular crop bale 108, at block 406 averages can be calculated for at least some, if not all, of those measurements. For example, for each crop bale 108, averages of the measurements for the associated crop material 106 can be determined for dry matter content, NDF, and ADF, among other properties. Such averages can be determined at a variety of different times, including, for example, continuously, at predetermined intervals, and/or be triggered by a trigger event, such as, for example, upon completion of formation of the crop bale 108.

At block 408, a determination can be made as to whether the forming or bailing of the particular crop bale 108 that is associated with the crop material 106 that was sensed and measured at steps 404 and 406 is complete. Determining the completion of the baling of a particular crop bale 108 can occur at a variety of different times. For example, according to certain embodiments, such completion of the crop bale 108 can occur when the crop bale 108 is ready for wrapping, such as via use of the binding material. According to other embodiments, completion of the crop bale 108 can be associated with the completion of such wrapping by the binding unit 340 and/or the crop bale 108 being released or dropped from the harvesting machine 100. According to other embodiments, completion of the crop bale 108 can occur upon components within the baling or compression chamber 226, such as, for example, press rolls or plungers, releasing a pressure that is typically used to form at least the shape of the crop bale 108. As seen in FIG. 4, if the determination at block 408 is that the baling of the particular crop bale 108 is not yet completed, then the method 400 continues with the intake (block 402) and measuring (block 404) of the crop material 106 that is being used in the formation of the of the crop bale 108, as well as determining at block 406 averages for the measured properties of the crop material 106 that is forming the crop bale 108.

If however at block 408 the baling of the particular crop bale 108 is determined to be completed, then at block 410 the measured and/or average properties from block 404 and/or block 406 can be used in determining other characteristics of the crop bale 108, including, for example, a relative feed value of the crop bale 108. Relative feed value can indicate a nutrient content or level of the crop material 106 contained in the crop bale 108, and can be determined in a variety of different manners. For example, according to certain embodiments, the nutrient content of the crop material 106, and thus the properties of the crop bale 108, can be evaluated using, for example, the averages for dry matter content, NDF, and ADF that were obtained at block 406. Information regarding such nutrient content of the crop material 106 in the crop bale 108 can also be evaluated with respect to a predetermined threshold or standard to determine a relative value. For example, the measured nutritional content of the crop bale can be evaluated with respect to the Relative Feed Value index to determine the relative feed value of the crop material 106. The relative feed value can reflect both the digestibility, from a % ADF, and an intake potential from a % NDF, which can provide an estimation as to the quality of the crop bale 108, and, moreover, of the crop material 106 contained in the crop bale 108. Determinations regarding the relative feed value can utilized tables or other manners in which the Relative Feed Value index can be stored in the memory device(s) 306, 306' of the constituent sensor 112 and/or the controller 110 of the control system 110.

Additionally, at block 410, the weight of the crop bale 108 can be determined. According to certain embodiments, the weight can be measured by a scale or sensor 344 of the harvesting machine 100. Additionally, or alternatively, the weight can be estimated based on other sensed information, including, for example, information regarding the physical size and/or shape of the crop bale 108 and/or information that sensed the quality of crop bale 106 that was gathered at block 402.

The properties calculated or determined at block 410 can be captured or recorded at block 412. For example, to the extent not already recorded or stored, the properties calculated or determined at one or more of block(s) 404, 406, and/or 410 can be stored or recoded in the memory device 306' of the constituent sensor 112, and/or the memory device 306 of the control system 110. Thus, for example, information regarding the properties measured by the constituent sensor 112, including the averages of such properties, among other information regarding the crop bale 108 and/or the associated crop material 106, can be recorded in one or more memory devices 306, 306' at block 412.

At block 414, the information recorded at block 410, and/or particular information recorded or determined at one or more of block(s) 404, 406, and/or 410, can be communicated to the central system 314. According to certain embodiments, the information communicated to the central system 314 can be recorded, such as, for example, in one or more databases 328. Additionally, as discussed below, as the central system 314 can collect information regarding a plurality of crop bales 108, and the central system 314, and/or other devices that are in communication with the central system 314, can utilize the collected information for a variety of different purposes.

FIG. 5 depicts an illustrative method 500 of grouping and prioritizing crop bales 108 based on properties of the crop bales 108, and moreover, the properties of the crop materials 106 contained within the associated crop bale 108. The method 500 can include, or otherwise be embodied as, a set of instructions that are stored in the memory device 306, 306', 326 and executable by the processor 304, 304', 324 of the one or more controller(s) 302, 302', 322, 346. Accordingly, it should be appreciated that the method 500 can be performed by the one or more controller(s) 302, 302', 322, 346. Further, it should be appreciated that the method 500 can be performed in a number of sequences other than the illustrative sequence, and that the method 500 can include activities other than, and/or in addition to, those depicted in FIG. 5.

At block 502, a database, such as, for example, the database 328 of the central system 314, can be built based on information pertaining to existing crop bales 108. According to certain embodiments, the database 328 can be based, at least in part, on particular properties the crop materials 106 measured for each of the different crop bales 108 that was communicated to the central system 314 at block 414 of FIG. 4. Thus, as information for additional crop bales 108 continues to be communicated to the central server at block 414, the size of the database 328 can increase. Accordingly, as the database 328 can be built using measurements, and/or averages from such measurement, obtained using the constituent sensor 112, including information obtained at one or more of blocks 404, 406, 410, and/or 412 of the method 400 discussed above with respect to FIG. 4, the database 328 can include, for each crop bale 108, information or values for dry matter, NDF, ABF, moisture, and crude protein, among other information. Further, while the database 328 is illustrated as being part of the central system 314, the database 328 can be maintained at a variety of different locations, including, for example, the control system 110 and/or another local or remote site, such as, for example, the warehouse 336. Additionally, the database 328 can be accessible from a variety of components, including, for example, the warehouse 336 or other computing device, including, but not limited to, a personal computing device 338 (FIG. 8).

The data or information contained in the database 328 however may not be limited to the information obtained through use of the constituent sensor 112, and moreover, information obtained through the method 400 discussed above. For example, the database 328 can also include an indication of crop type, as well as the cut cycle number, which can provide an indication of how many times the crop material 106 has previously been cut within a particular year and/or season, among other time periods. Additionally, the database 328 can include information such as the color and/or stem-to-leaves ratio of the crop material 106, which can be evaluated or determined by a controller 302, 302' using pictures or images of the crop bale 108 and/or crop material 106. According to certain embodiments, such information can be obtained using a camera 342 or other visual system of the control system 302. Additionally, such a camera 342 or visual system can also be used to provide information regarding the shape of the crop bale 108, as well as to determine if the crop bale 108 has a shape that deviates from one or more anticipated or standard shapes, including, for example, deviations from an anticipated circular or squared shape for the crop bale 108.

At block 504, one or more classification goals can be selected, such as, for example, via the input/output device 330, 332, 334 of the control system 110, central system 314, and/or warehouse 336, among other computing devices. Alternatively, according to other embodiments, the classification goal can be made using a personal computing device 338 (FIG. 8), including, for example, via a smart phone, tablet, or laptop, among other devices. The classification goals can provide a manner for differentiating, distinguishing, and/or grouping the various crop bales 108 that are in the database 328 that was built at block 502. For example, such classification goals can include one or more categories within the classification goal for grouping crop bales 108 based on similarities in particular properties, as well as distinguish such crop bales 108 from other crop bales 108 that may lack such similarities in one or more particular properties.

The classification goals, as well as the categories within each classification goal, can be preselected and/or selectively defined by an operator. Additionally, according to certain embodiments, the classification goals can be adjustable. The classification goals can also be based on variety of different types of criteria, including, for example, crop type and/or season. Further, according to certain embodiments, the operator can select a particular classification goal from a plurality of classification goals, and/or utilized a hybrid classification goal that is based on a merging of multiple classification goals. For example, according to certain embodiments, an operator can have the option of selecting from a plurality of classification goals that include: (1) one or more classification goals relating to the nutrient content or value of the crop bale 108, and, moreover, of the crop material 106 that is part of the crop bale 108, (2) one or more classification goals pertaining to a storage plan for the crop bale 108, and/or (3) one or more classification goals that relate to the animal type that is to be feed using the crop bale 108. However, variety of other classification goals, and/or combinations of classification goals, can be available for selection by a user.

According to certain embodiments, the categories within each classification goal can be distinguished from other categories in that same classification goal based certain predetermined criteria. For example, each category of a classification goal can be associated with a different predetermined value, or range of values, for one or more properties of the crop bale 108, including properties of the associated crop product 106 of the crop bale 108. Thus, for example, according to certain embodiments, the classification goals can look at one or more averages for the NDF, ADF, dry matter content, moisture content, and/or crude protein of the crop bale 108, as well as the associated relative feed value threshold (RFV), among other properties, in determining which particular category the crop bale 108 is to be assigned within the classification goal. The categories can also consider whether, in addition, or in lieu of, one or more properties being above and/or within a predetermined threshold or range of values, whether other properties of the crop bale 108 satisfy other goals, such as, for example, being of a particular crop type, number of cut cycle, color, stem to leaves ratio, and/or weight, among other considerations.

Additionally, according to certain embodiments, the classification goals can involve assigning various weightages to different properties of the crop bale 108. For example, below Table 1 provides an exemplary illustration of weightages, expressed as a percentage (%), being assigned to one or more different properties of the crop bales 108 that are stored, or will be stored, in the database 328. As seen, such weightages can be assigned to physical properties of the crop bale 108, such as, for example, the bale shape, weight, color, and stem to leaves (S/R) ratio, as well as to composition properties of the crop bale 108, such as, for example, dry matter content, NDF, ADF (not shown), crude protein, and moisture content of the crop product 106 of the crop bale 108, among other properties. Weightages can also be assigned to other properties of the crop bale 108, such as, for example, the crop type and timing of the collection of the crop material 106 of the crop bale 108, referred to in Table 1 as "Cut Cycle".

**TABLE 1**

| | Crop Type | Cut Cycle | Dry Matter | Color | S/R Ratio | ND F | Crude Protein | Moisture | Weight | Bale Shape |
|---|---|---|---|---|---|---|---|---|---|---|
| Opt . 1 | 70 | 70 | 70 | 70 | 100 | 100 | 100 | 70 | 100 | 100 |
| Opt . 2 | 50 | 0 | 100 | 0 | 70 | 70 | 70 | 100 | 100 | 50 |
| Opt . 3A | 100 | 0 | 100 | 10 | 100 | 70 | 70 | 50 | 50 | 50 |
| Opt . 3B | 100 | 50 | 100 | 10 | 70 | 100 | 100 | 70 | 50 | 50 |

As seen above, exemplary Table 1 also provides options ("Opt.") for four different classification goals. As previously indicated, according to certain embodiments, each classification goal, or option, can be operator selectable. Thus, for example, the operator can opt to select above "Opt. 1" in a connection with at least attempting to satisfy particular goals or objectives, and, at other times, select a different option, such as "Opt. 2", "Opt. 3A", or "Opt. 3B" in connection with seeking to attain other goals or objectives. Further, the weightages shown in Table 1 are merely examples, and the particular weightages used for each classification goal can depend, for example, at least in part on the objectives of the particular classification goal, among other factors. While, according to certain embodiments, the weightage assigned to the properties for the different classification goals can be predetermined, according to other embodiments, one or more, if not all, of the weightages can be set by an operator. Additionally, according to certain embodiments, the weightages can also be adjustable. For example, referencing FIG. 8, an operator can set, review, and/or adjust the weightages applied to at least some, if not all, of the properties, including, for example, via use of the personal computing device 338, among other input/output devices 330, 332, 334.

For at least purposes of illustration, above exemplary option 1 ("Opt. 1") can relate to a classification goal directed to the nutrient content or value of the crop bales 108, and moreover, of the crop material 106 of the crop bales 108. Thus, as seen above, in such a situation, properties such as NDF, crude protein, stem to leave (S/R) ratio, weight, and bale shape can be assigned a higher weightage than other properties or characteristics, such as crop type, cut cycle, dry matter content, color, and moisture content.

Further, "Opt. 2" in Table 1 can, for example, be associated with another, different classification goal, such as, for example, a storage plan for the crop bale 108. According to certain embodiments, such a storage plan can be directed to safety and ease of feeding. Such safety can relate to the storage of the crop bales 108, including determining the vertical height, and/or stacking order, at which different crop bales 108 are to be stacked or shelved. Additionally, storage plan can also be directed to the ease at which the stored crop bales 108 can be safely retrieved from storage, such as, later retrieval for use in feeding one or more animals.

Therefore, as seen by a comparison of the weightages applied for "Opt. 1" and "Opt. 2", a storage plan for safety and ease of feeding can place a larger emphasis on the crop bale 108 properties of moisture content and weight. The greater weightage to such properties can be attributed to the different goals of "Opt. 2". For example, assigning larger weightage to the properties of moisture content and weight can be related to attempting to identify which crop bales 108 are, for at least reasons of safety and later retrieval, to be stored at relatively low vertical heights, and/or on lower shelves. Moreover, such weightage can assist in identifying heavier, and wetter, crop bales 108 so that those identified crop bales 108 are to be stored at heights that are lower than the heights at which lighter, and drier, crop bales 108 are to be stored. Additionally, weightage can be also applied to certain properties, such as, for example, dry matter content and moisture content in a manner that seeks to manage risks that can be associated with mold poisons or mycotoxins in at least stored crop bales 108.

Turing to "Opt. 3A" and "Opt. 3B", both of these options can, for at least purposes of discussion, pertain to classification goals relating to use of crop bales 108 to feed particular animals, or animal types. For example, "Opt. 3A" can relate to using crop bales 108 as feed for mature horses, while "Opt. 3B" can relate to using crop bales 108 as feed for milking cows. As seen in the illustrated example, similar weightages can be applied to at least certain properties of the crop bale 108, including, for example, crop type, dry matter content, color, weight, and bale shape, while other properties can be valued differently for different animals, such as, for example, cut cycle, stem to leaves ratio, NDF, crude protein, and moisture content.

While Table 1 provides an example of classification goals using various weightages based on differences in animal type, the classification goals, and associated weightages, can also vary amongst the same animal type. For example, for at least cows, the actual weightages applied to the crop bale 108 properties stored in the database 328 can be based, at least in part, on whether the cow is on a low-silage diet, energy requirements, and/or whether the cow is pre-calving, close to calving, or post-calving, among other factors.

With weights assigned to one or more properties of the crop bales 108, at block 506 the crop bale 108 can be grouped based on one or more of the properties of the crop bale 108. Such grouping can be performed in a variety of manners, including, for example, via use of one or more algorithms that can be stored, in, and utilized by, one or more controllers 302, 322, 346 of the control system 110, the central system 314, and/or other device. A variety of different approaches can be utilized to group the crop bales 108, including, for example, via use of a k-means clustering algorithm, or a weighted k-means clustering algorithm, among other approaches. With respect to embodiments that utilize weighted or unweighted k-means clustering, the method 500 can include determining a number of clusters (*k*)*.* The selected number of clusters (*k*) can be based on a variety of criteria. For example, the number of clusters (*k*) can relate to the number of categories within a particular classification goal. As the classification goals can each have a different number of associated categories, the number of clusters (*k*) can vary for each classification goal. Thus, according to certain embodiments, for each classification goal, the number of clusters (k) for that classification goal can be pre-determined and stored, for example, in the memory device 306, 326 of the control system 110 and/or central system 314.

For example, as discussed above with respect to Table 1, "Opt. 1" can, for at least purposes of discussion, relate to a classification goal relating to nutritional content. Further, the classification goal of nutritional content can have two or more categories, each of which can relate to a different level, or ranges, of nutritional content. For example, the classification goal of nutritional content could have three categories, and thus three clusters, each of which corresponds to one of a high, medium, or low level of nutritional content. What can constitute high, medium and low levels of nutritional content can be predetermined, and can be based on a variety of factors, including, for example, NDF, ADF, and/or crude protein content, as well as combinations thereof, of the crop bale 108, and, moreover of the crop material 106 of the crop bale 108, as sensed via the constituent sensor 112. Similarly, "Opt. 2" from above Table 1, which, again, can relate to a storage plan for safety and ease of feeding could, for example, include at least one category indicating a relatively low storage placement for the crop bale(s) 108, such as, for example, at or around a bottom shelf of a shelving unit, and one or more other categories for placement of crop bale(s) 108 at one or more positions above the bottom shelf. Thus, in such an example, an "Opt. 2" can have two or more categories for the associated classification goal, "Opt. 2" can similarly have two or more clusters. Additionally, the classification goals associated with "Opt. 3A" and "Opt. 3A" in above Table 1, which relate to uses of the crop bales 108 as feed for different types of animals, can also have multiple categories, including categories regarding ranges of animal age and/or caving status (*e.g.*, pre-caving, caving, and post caving) among other categories, with each category corresponding to a different cluster.

Alternatively, according to other embodiments, the number of clusters (*k*) for each classification goal can be derived, such as, for example, via use of the elbow curve method. According to the elbow curve method, k-means clustering can be performed for different numbers of clusters (*k*), or moreover, for different values of k. For each k value, or number of clusters, average distances to the centroids of the different clusters is calculated across all data points. Such information can then be plotted as a sum of square distances versus cluster values (*k*). The plot can provide a visual indication of where the sum of squared distances has a sudden drop, which can indicate the optimal number of clusters for the classification goal.

As indicated above with respect to at least block 502, the database 328 can be a contain a dataset for each of the crop bales, the dataset containing a variety of information regarding the properties of the associated crop bale 108. Further, the datasets for the crop bales 108 can be stored in the database 328 in a particular order, such as, for example, in the order the information for the datasets for each of the crop bales 108 was received in the database 328. According to certain embodiments, utilization of k-means clustering can include shuffling the order of the crop bales 108, and associated datasets, such that the order in which the datasets for each crop bale 108 is given to the algorithm for the k-means clustering is different than the order in which those datasets are stored in the database 328. Such shuffling can, at times, assist in the ability of the controller 302, 322, 346 running the k-means clustering algorithm, and/or assist the associated memory device 306, 326, to handle the size or amount of information that is being processed. Additionally, or alternatively, such shuffling of the datasets can also be beneficial to any machine-learning training that can be accompanying the use of the datasets.

The datasets used for each crop bale 108 for the k-means clustering can, for example, include a data point for each of two or more properties of the crop bale 108, including the crop material 106 contained within the crop bale 108. Thus, each property in a dataset can have a corresponding data point. For example, as seen above in Table 1, the dataset for each crop bale 108 in the database 328 from block 502 can include ten data points (*x₁-x₁₀*), each data point (*xᵢ*) corresponding to information for one of the ten properties, namely: crop type (P1), number of cut cycle (P2), dry matter content (P3), color (P4), stem to leaves (S/R) ratio (P5), NDF (P6), crude protein (P7), moisture content (P8), weigh (P9), and bale shape (P10). For at least purposes of grouping, properties such crop type, color, and bale shape, among other properties that may not include numerical data, can be assigned a numerical representation (e.g., 0, 1, 2....) that can be used to distinguish the various characteristic types within each of those properties. While Table 1 illustrates ten properties (P1-P10), the number of properties utilized in grouping of the crop bales 108, such as via k-means clustering, does not necessarily need to include a data point for each property. For example, with reference to the illustrated embodiment, each classification goal can use a data point (*x₁-x₁₀*) corresponding to each property (P1-P10) for purposes of a k-mean clustering analysis, or, alternatively, can utilize some, select properties, and thereby utilize fewer than all of the data points.

For example, as seen by the weightages identified in Table 1, according to an exemplary embodiment, all ten of the properties (P1-P10) can be utilized in connection with the classification goals for "Opt. 1" and "Opt. 3B", namely nutrient content and feed for a milking cow, respectively. Accordingly, in such an example, the dataset for each crop bale 108 that is utilized for purposes of the k-means clustering analysis can include ten data points (*x₁-x₁₀*), each data point corresponding to one of the ten above-identified properties (P1-P10). Conversely, the properties of number of cut cycle (P2) and color (P4) have an assigned weightage of zero for the classification goal of storage plan for safety and ease of feeding ("Opt. 2"). Thus, according to certain embodiments, the datasets for each of the crop bales 108 for "Opt. 2" used for k-means clustering can each only involve eight data points (*x₁, x₃*, *x₅-x₁₀*), and moreover, may not utilize data points (*x₂, x₄*) for the properties having zero weightage (P2, P4). Alternatively, according to other embodiments, all ten properties (P1-P10) can be utilized in the k-means clustering analysis for "Opt. 2", but, for at least proposes of calculating centroid positions in the k-means clustering analysis, the calculation may not provide any weightage with respect the properties of number of cut cycle (P2) and color (P4). Similarly, the datasets utilized for the k-means clustering analysis in connection with the classification goal of feed for mature horse ("Opt. 3A") can include nine data points (*x₁, x₃*-*x₁₀*), as the property relating to number of cut cycle (P2) has an assigned weightage of zero. Alternatively, according to other embodiments, the datasets utilized for the k-means clustering analysis of "Opt. 3A" can utilize all ten properties (P1-P10), and thus ten data points (*x₁-x₁₀*), within a dataset, but, for at least proposes of calculating centroid positions in the k-means clustering analysis, the calculation with not provide any weightage with respect the properties of number of cut cycle (P2).

The k-means clustering analysis can then proceed with selecting an initial location for the centroid (*c*₁...*c*ₖ) of each cluster (k). The initial location of such centroids (*c*₁...*c*ₖ) for the different clusters can, for example, be randomly selected. Then, in a first step, according to certain embodiments, for each data point (*xᵢ*) in each crop bale 108 dataset, a determination can be made as to which is the closest, or nearest, centroid (*cⱼ*) to that particular data point (*xᵢ*). The nearest centroid (*cⱼ*) can be determined in a variety of different manners, including, for example, via determining the Euclidian distance or the sum of the squared distance between the data point (*xᵢ*) and each centroid (*e.g*., argmin*j*∥*xᵢ*-*cⱼ*∥²), among other manners for determining distance. From such calculations, each data point (*xᵢ*) can be assigned to the nearest centroid (*cⱼ*).

With the data points (*xᵢ*) assigned to the nearest centroid (*cⱼ*), in a second step, the positions of each of the centroids (*cⱼ*) can be recalculated. According to certain embodiments, this can be achieved, for example, by using all of the data points (*xᵢ*) that have been assigned to a particular centroid (*cⱼ*), and determining a mean or average value or position, which will then become the position of that particular centroid (*cⱼ*). Alternatively, as discussed above with respect to block 504, different weightages can be applied to different properties (P1-P10). Such weightages can be included in the determination of the location of the centroid (*cⱼ*). More particularly, rather than utilizing just the mean or average value or position for the centroid (*cⱼ*), the relative weightages for the different provirperties are used to pull, or move, the centroid from the mean or average value or position and toward the property(ies) having higher weightages. Thus, in the example provided in Table 1 regarding the classification goal relating to nutritional content ("Opt. 1"), the higher weightages applied stem-to-leaves ratio, NDF, crude protein, weight, and bale shape can influence or bias the calculated positioning of the centroids (*c*₁...*c*ₖ) of the clusters (*k*) toward those properties, and away from lesser weighted properties of crop type, cut cycle, dry matter content, color, and moisture content.

As the position of the centroids (*cⱼ*) can be changed by the second step, the process can return to the first step, where, for each data point (*xᵢ*), a determination is again made, in view of possible repositioning of the centroids (*c*₁...*c*ₖ), as to the nearest centroid (*cⱼ*) for each data point (*xᵢ*). By repeating this first step following a change in position of the centroid(s) (*c*₁...*c*ₖ), a data point (*xᵢ*) can be reassigned to a different, and now closer, centroid (*cⱼ*). Such a reassignment(s) of a data point(s) (*xᵢ*) to a different centroids (*cⱼ*) can result in the second step being repeat so that the position of the centroids (*c*₁...*c*ₖ) is updated or changed to account for the updated assignment of data point(s) to that centroid (*cⱼ*). Again, while some embodiments can determine a location of the nearest centroid using an mean or average value or position based on the associated assigned data points (*xᵢ*), according to other embodiments, such a determination can also factor in the weightages for the different properties, as discussed above, so that the location of the centroid (*cⱼ*) is biased, or moved, toward certain properties and/or moved away from other properties. These first and second steps of the k-means clustering process can be part of an iterative process that can be repeated a predetermined number of times, and/or until changes in assignments of data points (*xᵢ*) to centroids (*cⱼ*) have ceased, and/or until the calculated distances between the data points (*xᵢ*) and the nearest centroid (*cⱼ*) stops changing.

FIG. 6 provides a simplified illustration of the k-means clustering analysis for a plurality of data points 600 from different datasets. In this example, a data point 600 for each dataset for each crop bale 108 is plotted as a function of two of the properties (P1-P10), which are generally represented in FIG. 6 as Pₓ and P_{y}. The k-means clustering is shown as having three clusters, namely clusters 602a-c. Initially, a first centroid X₁' for the first cluster 602a, second centroid X₂' for the second cluster 602b, and a third centroid X₃' for the third cluster 602c can be randomly assigned a position. The analysis can then proceed with the above-discussed first step, where, for each data point 600, the distances between the data point 600 and each of the centroids X₁', X₂', X₃' are calculated so as to identify, and assign the data point 600 to, the nearest centroid X₁', X₂', X₃'. With the data points 600 assigned to a centroid X₁', X₂', X₃', at the second step, the locations of the centroids X₁', X₂', X₃' are then calculated using the values of the assigned data points 600. The updated locations of the centroids X₁', X₂', X₃' are generically represented in FIG. 6 as centroids X₁, X₂, X₃, respectively. Again, according to certain embodiments, such location determination can factor in the weightages applied at block 504. Thus, in this example, if a first property Pₓ has a greater weightage than the second property P_{y}, then the value of the data points associated with the first property Pₓ will be a larger factor in the calculation of the location of the centroids X₁, X₂, X₃. Such an influence can, for example, result in a change in the location of the centroids X₁, X₂, X₃ along the Pₓ axis in a direction away from the location that would otherwise be associated with an unweighted mean or average location for the centroids X₁, X₂, X₃. The first and second steps can then be repeated a predetermined number of times, and/or until the assignment of data points 600 and/or distance between the data points 600 and the associated centroid X₁, X₂, X₃ no longer changes. Upon completion of the iterative process for the k-mean cluster analysis, the data points 600 can be assigned to a final one of the first cluster 602a, second cluster 602b, or third cluster 602c.

With the location of each of the centroids (*cᵢ...cₖ*) determined, the clusters (*k*) can be identified, if not already identified, as representing a particular category for the classification goal. For example, as discussed above, the classification goal of nutritional content ("Opt. 1") can include three categories, namely, high nutritional content, medium nutritional content, and low nutritional content, and thus can each correspond to one of three clusters (*k₁₋₃*). In such an example, information regarding the location of each of the centroids (*c₁₋₃*) for each of the three clusters (*k₁₋₃*), and, moreover, the weighted averages of the data points for the properties (P1-P10) associated with such locations of the each of the centroids (*c₁₋₃*), can be evaluated to determine the associated nutritional content category to be assigned to each of the clusters (*k₁₋₃*)*.* For example, data associated with the location of each of the centroids (*c₁₋₃*), including, for example, the value for one or more of the NDF, ADF, dry matter content, moisture content, and/or crude protein, as well as the associated relative feed value threshold (RFV), can be evaluated for each of the centroids (*c₁₋₃*) to determine which centroid (*c₁₋₃*) will be assign to the high, medium, and low nutritional content categories for that particular classification goal. Similar analysis can be performed with respect to other classification goals so as to categorize the different clusters (*k*).

By categorizing the clusters (*k*) for a particular classification goal, the datasets that are part of those clusters (*k*) are also categorized, thereby categorizing the associated crop bale 108. Thus, at block 508, the crop bales 108 can be grouped together based on being part of, or assigned to, the same cluster (*k*), and thereby differentiated from other crop bales 108 that grouped or assigned to a different cluster (*k*). Further, such grouping can, for example, include each crop bale 108 being tagged as being part of a particular category within a selected classification goal. Such determined association, or tagging, of the crop bales 108 with a particular category of a selected classification goal can be recorded, for example, within the database 328 that was created at block 502, among other locations in the control system 110, central system 314, and/or other site 336.

At block 510, the collected information regarding the grouping or tagging of the crop bales 108 can be utilized to develop, if not already developed, a plan that is associated with the objectives of the corresponding classification goal. For example, plans relating to nutritional content ("Opt. 1") can involve determining monetary values for the crop bales 108 based on which of the final groupings, or categories within the classification goal, the crop bales 108 were assigned at block 506. Alternatively, plans relating to storage of the crop bale ("Opt. 2") can involve determining storage locations, or storage heights, for the crop bales 108 such that crop bales 108 having higher moisture content and weight are placed at lower locations than other crop bales 108 that may be drier and/or lighter. Further, plans relating to nutritional content ("Opt. 1"), storage plans ("Opt. 2"), and/or feed for animal type ("Opt. 3A" and "Opt. 3B") can involve determining which crop bales 108 are to be feed to which animal type and/or the timing of usage of the different crop bales 108 for such feeding of the animals.

The information regarding the classification or grouping of crop bales 108 can be expressed to an operator via an input/output device 330, 332, 334 in a variety of different manners. For example, a variety of different types of numerical, graphical, and/or worded expressions can be utilized to convey information regarding the groupings of crop bales 108. For example, FIG. 7 illustrates a map 701 depicting representations for a plurality of crop bales 108 in different rows 704a-d of a field 702 that can be displayed on a display 700, such as, for example, a monitor in the harvesting machine 100 or agricultural vehicle 102, a display of the input/output devices 332, 334 of the central system 310 or other site 336, and/or a personal computing device 338, among other displays or output devices. The location of the crop bales 108 in the field 702, as shown on the map 701, can correspond to an actual location for the displayed crop bales 108, such as, for example, a GPS location for each crop bale 108.

As also illustrated by FIG. 7, the different categories of the classification goal to which the displayed crop bales 108 are assigned can be indicated on the display 700 by one or more distinctive visual indicators 706a-c. Such visual indicators 706a-c can be associated with, or provide, a graphical representation or icon for, or otherwise representing, the crop product 108. Further, the visual indicator(s) 706a-c for each category within a classification goal can be visually distinguishable from the visual indicator(s) of the other categories of that classification goal. The distinctiveness of each visual indicator 706a-c can be achieved in a variety of different manners, including, for example, differences in at least one of a fill pattern, outline style, shape, and/or color. For example, differences in the fill patterns of the visual indicators 706a-c can include, for example the style of the fill pattern, the direction of the fill pattern, and/or the line weight of the fill pattern, among other differences. Similarly, differences in the outline style for the visual indicator(s) 706a-c can relate to the line width, line format, and/or color, among other differences. By utilizing different visual indicator(s) 706a-c to convey information regarding the different groupings and/or category assignments of the displayed crop bales 108, as shown in FIG. 7, an operator can visually identify crop bales 108 belonging to a particular category or grouping of a classification goal, as well as identify the crop bales 108 that do not belong to the grouping. For example, using the first visual indicator(s) 706a, an operator can visually identify on the display 700 the location of the particular crop bales 108 that belong to a first category of high nutritional content for the nutritional content classification goal, as well as identify the crop bales 108 that are not part of that first category. The operator can then elect to proceed with collecting the crop bales 108 that are shown on the display 700 as having the first visual indicator(s) 706a. In such an example, the operator can recognize that crop bales 108 that belong to the medium and low nutritional content categories, as indicated by the visually distinctive second indicator(s) 706b and third indicator(s) 706c, respectively, are to remain in the field 702 for retrieval at another, later time. While such visual distinction is discussed above with respect to categories for one type of classification goal, visual indicators 706a-c can be applied in similar matters to other classification goals, and more particularly, to the categories or groupings of a selected classification goal.

While the disclosure has been illustrated and described in detail in the foregoing drawings and description, the same is to be considered as exemplary and not restrictive in character, it being understood that only illustrative embodiments thereof have been shown and described and that all changes and modifications that come within the claims are desired to be protected.

## Claims

1. A system (300) for grouping crop bales (108), the system (300) comprising:
a constituent sensor (112) for analyzing, for each crop bale (108) of a plurality of crop bales (108), a plurality of properties of a crop material (106) of the crop bale (108); and
a bale grouping computing device (302, 302', 322, 346) configured to:
i. receive a selection of a classification goal from a plurality of classification goals, each of the plurality of classification goals (1) having two or more categories, and (2) assigns a weightage to the plurality of properties, wherein the weightage assigned to at least one property of the plurality of properties for one classification goal of the plurality of classification goals is different than the weightage assigned to the at least one property for at least another classification goal of the plurality of classification goals;
ii. record, in a database (328) and for each crop bale (108) of the plurality of crop bales (108), a dataset corresponding to the plurality of properties;
iii. assign, using a k-means clustering analysis, the dataset of each crop bale (108) of the plurality of crop bales (108) to a cluster of a plurality of clusters, each cluster of the plurality of clusters corresponding to one category of the two or more categories of the selected classification goal;
iv. determine a location of a centroid for each cluster of the plurality of clusters utilizing the weightage assigned for the selected classification goal; and
v. group each crop bale (108) of the plurality of crop bales (108) into a category of the two or more categories of the selected classification goal based on the cluster to which the dataset associated with the crop bale (108) was assigned.

2. The system (300) of claim 1, further including an agricultural harvesting machine (100) configured to collect the crop material (106) from a field and having a baling chamber for compression of the crop material (106) during formation of the crop bale (108).

3. The system (300) of claim 1 or 2, wherein at least one of the plurality of classification goals is a nutritional content goal for the crop bales (108), and wherein each category of the two or more categories for the nutritional content goal is assigned to a different range of nutritional content.

4. The system (300) of at least one of the preceding claims 1 to 3, wherein at least one of the plurality of classification goals is a storage plan, and wherein the two or more categories of the storage plan relate to a moisture content and a physical weight of the crop bale (108).

5. The system (300) of at least one of the preceding claims 1 to 4, wherein at least one of the plurality of classification goals is an animal feeding plan, and wherein the weightage assigned to one or more properties of the plurality of properties for the animal feeding plan is determined based on an animal type that is to be feed by one or more of the plurality of crop bales (108).

6. The system (300) of at least one of the preceding claims 1 to 5, wherein the plurality of properties comprises at least two of: a moisture content, a dry matter content, an acid detergent fiber, a neutral detergent fiber, a crude protein, and a relative feed value for each crop bale (108).

7. A method for grouping crop bales (108), in particular for a system for grouping bales, the method comprising:
sensing, by a constituent sensor (112), and for each crop bale (108) of a plurality of crop bales (108), a plurality of properties of a crop material (106) of the crop bale (108);
recording, by at least one controller (302, 302', 322, 346) having a processor (304, 304', 324, 346), for each crop bale (108), the sensed plurality of properties as a dataset;
receiving, by the least one controller (302, 302', 322, 346), a signal indicating a classification goal selected from a plurality of classification goals, each classification goal of the plurality of classification goals having two or more categories, wherein at least one classification goal of the plurality of classification goals assigns a weightage to at least one property of the plurality of properties that is different than a weightage assigned to the at least one property by at least another classification goal of the plurality of classification goals;
assigning, by the at least one controller (302, 302', 322, 346), the dataset of each crop bale (108) of the plurality of crop bales (108) to a category of the two or more categories of the selected classification goal, wherein the assignment is based at least in part on the weightage assigned for the selected classification goal;
wherein the step of assigning comprises assigning, using a k-means analysis, each crop bale (108) of the plurality of crop bales (108) to a cluster of a plurality of clusters, each cluster of the plurality of clusters corresponding to one of the two or more categories of the selected classification goal, and wherein a determination of a location of a centroid for each cluster of the plurality of clusters utilizes the weightage assigned for the selected classification goal; and
generating, by the at least one controller (302, 302', 322, 346), a map (701) for display on a display (700), the map (701) indicating the category to which the dataset for at least one crop bale (108) was assigned.

8. The method of claim 7, further including:
determining, using a location system (312), a location for each crop bale (108) of the plurality of crop bales (108); and
displaying the map (701) on the display (700), the map (701) further including the location of the at least one crop bale (108).

9. The method of at least one of the preceding claims 7 to 8, further comprising:
assigning, based on the assigned category, an icon to the at least one crop bale (108), the icon including a visual indicator (706a, 706b, 706c) for display on the map (701) that is associated with the category that the at least one crop bale (108) was assigned, the visual indicator (706a, 706b, 706c) being visually distinctive from another visual indicator (706a, 706b, 706c) that is associated with a different category of the two more categories; and
displaying the map (701) and the icon on the display (700).

10. The method of at least one of the preceding claims 7 to 9, wherein at least one of the plurality of classification goals is a nutritional content goal for the crop bales (108), and wherein each category of the two or more categories for the nutritional content goal is assigned to a different range of nutritional content.

11. The method of at least one of the preceding claims 7 to 10, wherein at least one of the plurality of classification goals is a storage plan, and wherein the two or more categories of the storage plan relate to different levels of a moisture content and a physical weight of the crop bale (108).

12. The method of at least one of the preceding claims 7 to 11, wherein at least one of the plurality of classification goals is an animal feeding plan, and wherein the weightage assigned to the at least one property of the plurality of properties for the animal feeding plan is based on an animal type that is to be feed by at least one of the plurality of crop bales (108).

13. The method of at least one of the preceding claims 7 to 12, wherein the plurality of properties comprises at least two of the following: a moisture content, a dry matter content, an acid detergent fiber, a neutral detergent fiber, and a crude protein.

14. The method of at least one of the preceding claims 7 to 13, wherein the method further includes determining, by the at least one controller (302, 302', 322, 346) and using at least some of the plurality of properties, a relative feed value for each crop bale (108), and wherein the relative feed value is included in the dataset for each crop bale (108).

## Patentansprüche

1. System (300) zum Gruppieren von Erntegutballen (108), wobei das System (300) Folgendes umfasst:
einen Bestandteilsensor (112) zum Analysieren, für jeden Erntegutballen (108) mehrerer Erntegutballen (108), mehrerer Eigenschaften eines Erntegutmaterials (106) des Erntegutballens (108); und
eine Ballengruppierungs-Rechenvorrichtung (302, 302', 322, 346), die ausgelegt ist zum:
i. Empfangen einer Auswahl eines Klassifizierungsziels aus mehreren Klassifizierungszielen, wobei jedes der mehreren Klassifizierungsziele (1) zwei oder mehr Kategorien aufweist, und (2) den mehreren Eigenschaften eine Gewichtung zuweist, wobei sich die Gewichtung, die mindestens einer Eigenschaft der mehreren Eigenschaften für ein Klassifizierungsziel der mehreren Klassifizierungsziele zugewiesen ist, von der Gewichtung unterscheidet, die der mindestens einen Eigenschaft für mindestens ein anderes Klassifizierungsziel der mehreren Klassifizierungsziele zugewiesen ist;
ii. Aufzeichnen, in einer Datenbank (328) und für jeden Erntegutballen (108) der mehreren Erntegutballen (108), eines Datensatzes, der den mehreren Eigenschaften entspricht;
iii. Zuweisen, unter Verwendung einer k-Means-Clusteranalyse, des Datensatzes jedes Erntegutballens (108) der mehreren Erntegutballen (108) zu einem Cluster mehrerer Cluster, wobei jedes Cluster der mehreren Cluster einer Kategorie der zwei oder mehr Kategorien des ausgewählten Klassifizierungsziels entspricht;
iv. Bestimmen einer Position eines Schwerpunkts für jedes Cluster der mehreren Cluster unter Verwendung der für das ausgewählte Klassifizierungsziel zugewiesenen Gewichtung; und
v. Gruppieren jedes Erntegutballens (108) der mehreren Erntegutballen (108) in eine Kategorie der zwei oder mehr Kategorien des ausgewählten Klassifizierungsziels basierend auf dem Cluster, dem der mit dem Erntegutballen (108) assoziierte Datensatz zugewiesen wurde.

2. System (300) nach Anspruch 1, ferner umfassend eine landwirtschaftliche Erntemaschine (100), die ausgelegt ist zum Sammeln des Erntegutmaterials (106) von einem Feld, und die eine Ballenpresskammer zum Komprimieren des Erntegutmaterials (106) während der Bildung des Erntegutballens (108) aufweist.

3. System (300) nach Anspruch 1 oder 2, wobei mindestens eines der mehreren Klassifizierungsziele ein Nährstoffgehaltsziel für die Erntegutballen (108) ist und wobei jede Kategorie der zwei oder mehr Kategorien für das Nährstoffgehaltsziel einem unterschiedlichen Bereich von Nährstoffgehalt zugewiesen ist.

4. System (300) nach mindestens einem der vorhergehenden Ansprüche 1 bis 3, wobei mindestens eines der mehreren Klassifizierungsziele ein Lagerungsplan ist und wobei sich die zwei oder mehr Kategorien des Lagerungsplans auf einen Feuchtigkeitsgehalt und ein physisches Gewicht des Erntegutballens (108) beziehen.

5. System (300) nach mindestens einem der vorhergehenden Ansprüche 1 bis 4, wobei mindestens eines der mehreren Klassifizierungsziele ein Tierfütterungsplan ist und wobei die einer oder mehreren Eigenschaften der mehreren Eigenschaften für den Tierfütterungsplan zugewiesene Gewichtung basierend auf einem Tiertyp bestimmt wird, der von einem oder mehreren der mehreren Erntegutballen (108) zu füttern ist.

6. System (300) nach mindestens einem der vorhergehenden Ansprüche 1 bis 5, wobei die mehreren Eigenschaften mindestens zwei von Folgendem umfassen: einen Feuchtigkeitsgehalt, einen Trockensubstanzgehalt, eine Säuredetergenzfaser, eine Neutraldetergenzfaser, ein Rohprotein und einen relativen Futterwert für jeden Ernteballen (108).

7. Verfahren zum Gruppieren von Erntegutballen (108), insbesondere für ein System zum Gruppieren von Ballen, wobei das Verfahren Folgendes umfasst:
Erfassen, durch einen Bestandteilsensor (112) und für jeden Erntegutballen (108) mehrerer Erntegutballen (108), mehrerer Eigenschaften eines Erntegutmaterials (106) des Erntegutballens (108);
Aufzeichnen, durch mindestens eine Steuerung (302, 302', 322, 346) mit einem Prozessor (304, 304', 324, 346), für jeden Erntegutballen (108), der erfassten mehreren Eigenschaften als ein Datensatz;
Empfangen, durch die mindestens eine Steuerung (302, 302', 322, 346), eines Signals, das ein Klassifizierungsziel angibt, das aus mehreren Klassifizierungszielen ausgewählt ist, wobei jedes Klassifizierungsziel der mehreren Klassifizierungsziele zwei oder mehr Kategorien aufweist, wobei mindestens ein Klassifizierungsziel der mehreren Klassifizierungsziele mindestens einer Eigenschaft der mehreren Eigenschaften eine Gewichtung zuweist, die sich von einer Gewichtung unterscheidet, die der mindestens einen Eigenschaft durch mindestens ein anderes Klassifizierungsziel der mehreren Klassifizierungsziele zugewiesen wird;
Zuweisen, durch die mindestens eine Steuerung (302, 302', 322, 346), des Datensatzes jedes Erntegutballens (108) der mehreren Erntegutballen (108) zu einer Kategorie der zwei oder mehr Kategorien des ausgewählten Klassifizierungsziels, wobei die Zuweisung mindestens teilweise auf der für das ausgewählte Klassifizierungsziel zugewiesenen Gewichtung basiert;
wobei der Schritt des Zuweisens Zuweisen, unter Verwendung einer k-Means-Analyse, jedes Erntegutballens (108) der mehreren Erntegutballen (108) zu einem Cluster aus mehreren Clustern umfasst, wobei jedes Cluster der mehreren Cluster einer der zwei oder mehr Kategorien des ausgewählten Klassifizierungsziels entspricht, und wobei eine Bestimmung einer Position eines Schwerpunkts für jedes Cluster der mehreren Cluster die für das ausgewählte Klassifizierungsziel zugewiesene Gewichtung nutzt; und
Erzeugen, durch die mindestens eine Steuerung (302, 302', 322, 346), einer Karte (701) zur Anzeige auf einer Anzeige (700), wobei die Karte (701) die Kategorie angibt, der der Datensatz für mindestens einen Erntegutballen (108) zugewiesen wurde.

8. Verfahren nach Anspruch 7, das ferner Folgendes umfasst:
Bestimmen, unter Verwendung eines Positionierungssystems (312), einer Position für jeden Erntegutballen (108) der mehreren Erntegutballen (108); und
Anzeigen der Karte (701) auf der Anzeige (700), wobei die Karte (701) ferner die Position des mindestens einen Erntegutballens (108) beinhaltet.

9. Verfahren nach mindestens einem der vorhergehenden Ansprüche 7 bis 8, das ferner Folgendes umfasst:
Zuordnen, basierend auf der zugewiesenen Kategorie, eines Symbols zu dem mindestens einen Erntegutballen (108), wobei das Symbol einen visuellen Indikator (706a, 706b, 706c) zur Anzeige auf der Karte (701) beinhaltet, der mit der Kategorie assoziiert ist, der der mindestens eine Erntegutballen (108) zugewiesen wurde, wobei der visuelle Indikator (706a, 706b, 706c) visuell von einem anderen visuellen Indikator (706a, 706b, 706c), der mit einer anderen Kategorie der zwei oder mehr Kategorien assoziiert ist, unterscheidbar ist; und
Anzeigen der Karte (701) und des Symbols auf der Anzeige (700).

10. Verfahren nach mindestens einem der vorhergehenden Ansprüche 7 bis 9, wobei mindestens eines der mehreren Klassifizierungsziele ein Nährstoffgehaltsziel für die Erntegutballen (108) ist und wobei jede Kategorie der zwei oder mehr Kategorien für das Nährstoffgehaltsziel einem unterschiedlichen Bereich von Nährstoffgehalt zugewiesen ist.

11. Verfahren nach mindestens einem der vorhergehenden Ansprüche 7 bis 10, wobei mindestens eines der mehreren Klassifizierungsziele ein Lagerungsplan ist und wobei sich die zwei oder mehr Kategorien des Lagerplans auf unterschiedliche Niveaus eines Feuchtigkeitsgehalts und eines physischen Gewichts des Erntegutballens (108) beziehen.

12. Verfahren nach mindestens einem der vorhergehenden Ansprüche 7 bis 11, wobei mindestens eines der mehreren Klassifizierungsziele ein Tierfütterungsplan ist und wobei die der mindestens einen Eigenschaft der mehreren Eigenschaften für den Tierfütterungsplan zugewiesene Gewichtung auf einem Tiertyp basiert, der von mindestens einem der mehreren Erntegutballen zu füttern ist (108).

13. Verfahren nach mindestens einem der vorhergehenden Ansprüche 7 bis 12, wobei die mehreren Eigenschaften mindestens zwei der Folgenden umfassen: einen Feuchtigkeitsgehalt, einen Trockensubstanzgehalt, eine Säuredetergenzfaser, eine Neutraldetergenzfaser, ein Rohprotein.

14. Verfahren nach mindestens einem der vorhergehenden Ansprüche 7 bis 13, wobei das Verfahren ferner Bestimmen, durch die mindestens eine Steuerung (302, 302', 322, 346) und Verwenden mindestens einiger der mehreren Eigenschaften, eines relativen Futterwerts für jeden Erntegutballen (108) beinhaltet und wobei der relative Futterwert in dem Datensatz für jeden Erntegutballen (108) enthalten ist.

## Revendications

1. Système (300) de regroupement de balles de récolte (108), le système (300) comprenant :
un capteur de composants (112) permettant d'analyser, pour chaque balle de récolte (108) d'une pluralité de balles de récolte (108), une pluralité de propriétés d'un matériau de récolte (106) de la balle de récolte (108) ; et
un dispositif informatique de regroupement de balles (302, 302', 322, 346) conçu pour :
i. recevoir une sélection d'un objectif de classification parmi une pluralité d'objectifs de classification, chacun de la pluralité d'objectifs de classification (1) ayant au moins deux catégories, et (2) attribuant une pondération à la pluralité de propriétés, la pondération attribuée à au moins une propriété de la pluralité de propriétés pour un objectif de classification de la pluralité d'objectifs de classification étant différente de la pondération attribuée à l'au moins une propriété pour au moins un autre objectif de classification de la pluralité d'objectifs de classification ;
ii. enregistrer, dans une base de données (328) et pour chaque balle de récolte (108) de la pluralité de balles de récolte (108), un ensemble de données correspondant à la pluralité de propriétés ;
iii. attribuer, à l'aide d'un regroupement des k-moyennes, l'ensemble de données de chaque balle de récolte (108) de la pluralité de balles de récolte (108) à un groupe d'une pluralité de groupes, chaque groupe de la pluralité de groupes correspondant à une catégorie des au moins deux catégories de l'objectif de classification sélectionné ;
iv. déterminer un emplacement d'un centroïde pour chaque groupe de la pluralité de groupes au moyen de la pondération attribuée pour l'objectif de classification sélectionné ; et
v. regrouper chaque balle de récolte (108) de la pluralité de balles de récolte (108) dans une catégorie des au moins deux catégories de l'objectif de classification sélectionné sur la base du groupe auquel l'ensemble de données associé à la balle de récolte (108) a été attribué.

2. Système (300) selon la revendication 1, comprenant en outre une machine de récolte agricole (100) conçue pour collecter le matériau de récolte (106) à partir d'un champ et ayant une chambre de pressage pour comprimer le matériau de récolte (106) pendant la formation de la balle de récolte (108).

3. Système (300) selon la revendication 1 ou 2, au moins l'un de la pluralité d'objectifs de classification étant un objectif de teneur nutritionnelle pour les balles de récolte (108), et chaque catégorie des au moins deux catégories pour l'objectif de teneur nutritionnelle étant attribuée à une plage différente de teneur nutritionnelle.

4. Système (300) selon au moins l'une des revendications précédentes 1 à 3, au moins l'un de la pluralité d'objectifs de classification étant un plan de stockage, et les au moins deux catégories du plan de stockage se rapportant à une teneur en humidité et à un poids physique de la balle de récolte (108).

5. Système (300) selon au moins l'une des revendications précédentes 1 à 4, au moins l'un de la pluralité d'objectifs de classification étant un plan d'alimentation animale, et la pondération attribuée à au moins une propriété de la pluralité de propriétés pour le plan d'alimentation animale étant déterminée en fonction du type d'animal qui doit être alimenté par au moins l'une de la pluralité de balles de récolte (108).

6. Système (300) selon au moins l'une des revendications précédentes 1 à 5, la pluralité de propriétés comprenant au moins deux parmi : une teneur en humidité, une teneur en matière sèche, une fibre détergente acide, une fibre détergente neutre, une protéine brute, et une valeur d'alimentation relative pour chaque balle de récolte (108).

7. Procédé de regroupement de balles de récolte (108), en particulier pour un système de regroupement de balles, le procédé comprenant les étapes consistant à :
détecter, par un capteur de composants (112), et pour chaque balle de récolte (108) d'une pluralité de balles de récolte (108), une pluralité de propriétés d'un matériau de récolte (106) de la balle de récolte (108) ; enregistrer, par au moins un dispositif de commande (302, 302', 322, 346) ayant un processeur (304, 304', 324, 346), pour chaque balle de récolte (108), la pluralité de propriétés détectées en tant qu'ensemble de données ; recevoir, par l'au moins un dispositif de commande (302, 302', 322, 346), un signal indiquant un objectif de classification sélectionné parmi une pluralité d'objectifs de classification, chaque objectif de classification de la pluralité d'objectifs de classification ayant au moins deux catégories, au moins un objectif de classification de la pluralité d'objectifs de classification attribuant une pondération à au moins une propriété de la pluralité de propriétés qui est différente d'une pondération attribuée à l'au moins une propriété par au moins un autre objectif de classification de la pluralité d'objectifs de classification ;
attribuer, par l'au moins un dispositif de commande (302, 302', 322, 346), l'ensemble de données de chaque balle de récolte (108) de la pluralité de balles de récolte (108) à une catégorie des au moins deux catégories de l'objectif de classification sélectionné, l'attribution étant basée au moins en partie sur la pondération attribuée à l'objectif de classification sélectionné ;
l'étape d'attribution comprenant l'étape consistant à attribuer, à l'aide d'une analyse des k-moyennes, chaque balle de récolte (108) de la pluralité de balles de récolte (108) à un groupe d'une pluralité de groupes, chaque groupe de la pluralité de groupes correspondant à l'une des au moins deux catégories de l'objectif de classification sélectionné, et une détermination de l'emplacement d'un centroïde pour chaque groupe de la pluralité de groupes utilisant la pondération attribuée pour l'objectif de classification sélectionné ; et générer, par l'au moins un dispositif de commande (302,
302', 322, 346), une carte (701) destinée à être affichée sur un écran (700), la carte (701) indiquant la catégorie à laquelle l'ensemble de données pour au moins une balle de récolte (108) a été attribué.

8. Procédé selon la revendication 7, comprenant en outre les étapes consistant à :
déterminer, à l'aide d'un système de localisation (312), un emplacement pour chaque balle de récolte (108) de la pluralité de balles de récolte (108) ; et
afficher la carte (701) sur l'écran (700), la carte (701) comprenant en outre l'emplacement de l'au moins une balle de récolte (108).

9. Procédé selon au moins l'une des revendications 7 à 8 précédentes, comprenant en outre les étapes consistant à :
attribuer, sur la base de la catégorie attribuée, une icône à l'au moins une balle de récolte (108), l'icône comprenant un indicateur visuel (706a, 706b, 706c) destiné à être affiché sur la carte (701) qui est associé à la catégorie à laquelle l'au moins une balle de récolte (108) a été attribuée, l'indicateur visuel (706a, 706b, 706c) étant visuellement distinct d'un autre indicateur visuel (706a, 706b, 706c) qui est associé à une catégorie différente des au moins deux catégories ; et
afficher la carte (701) et l'icône sur l'écran (700).

10. Procédé selon au moins l'une des revendications précédentes 7 à 9, au moins l'un de la pluralité d'objectifs de classification étant un objectif de teneur nutritionnelle pour les balles de récolte (108), et chaque catégorie des au moins deux catégories pour l'objectif de teneur nutritionnelle étant attribuée à une plage différente de teneur nutritionnelle.

11. Procédé selon au moins l'une des revendications précédentes 7 à 10, au moins l'un de la pluralité d'objectifs de classification étant un plan de stockage, et les au moins deux catégories du plan de stockage se rapportant à différents niveaux d'une teneur en humidité et d'un poids physique de la balle de récolte (108).

12. Procédé selon au moins l'une des revendications précédentes 7 à 11, au moins l'un de la pluralité d'objectifs de classification étant un plan d'alimentation animale, et la pondération attribuée à l'au moins une propriété de la pluralité de propriétés pour le plan d'alimentation animale étant basée sur le type d'animal qui doit être alimenté par au moins l'une de la pluralité de balles de récolte (108).

13. Procédé selon au moins l'une des revendications précédentes 7 à 12, la pluralité de propriétés comprenant au moins deux des propriétés suivantes : une teneur en humidité, une teneur en matière sèche, une fibre détergente acide, une fibre détergente neutre et une protéine brute.

14. Procédé selon au moins l'une des revendications précédentes 7 à 13, le procédé comprenant en outre les étapes consistant à déterminer, par l'au moins un dispositif de commande (302, 302', 322, 346) et en utilisant au moins certaines de la pluralité de propriétés, une valeur d'alimentation relative pour chaque balle de récolte (108), et la valeur d'alimentation relative étant incluse dans l'ensemble de données pour chaque balle de récolte (108).
